# EUROPEAN PATENT APPLICATION

(11) **EP 0 753 801 A1**
(43) Date of publication of application: **15.01.1997**
(21) Application number: 96110489.0
(22) Date of filing: 28.06.1996
(51) Int. Cl.: G03H 1/20

(54) **Reproduction of holograms**

(30) Priority: 14.07.1995 GB 9514441
(71) Applicant: NASHUA CORPORATION, Nashua, NH 03061 (US); NASHUA PHOTO LIMITED, Newton Abbot, Devon TG12 4PB (GB)
(72) Inventor: Phillips,Nicholas John, Loughborough, Leicestershire LE11 0JN (GB)
(74) Representative: Howden, Christopher Andrew

(57) **Abstract**

In a method of reproducing a transmission hologram a master hologram is recorded in a photographic emulsion layer (12) on a photographic plate (10), which is then developed to provide, by the developed emulsion layer, a surface having a relief pattern corresponding with the hologram with depressions corresponding with regions of high light-transmitting ability. A layer of light-transmitting photopolymerisable material (17) is then applied to the relief patterned surface and is exposed to photopolymerising light through the plate (10) so that the photopolymerisable material flows into and fills the depressions in the relief pattern during selective polymerisation due to such exposure. A more durable mask for the exposure of the photopolymerisable material may be produced by photographic transfer of the hologram to chrome-plated glass with selective etching of the chrome layer and underlying glass.

## Description

THIS INVENTION relates to a method of reproducing holograms and to holograms reproduced by the method.

It is an object of the present invention to provide a method of reproducing holograms, which method produces reproduction transmission holograms characterised by high brightness and contrast and in which coherent light is not required for the reproduction process.

According to one aspect of the invention, there is provided a method of reproducing holograms comprising photographically recording a hologram in a laminar medium and deriving therefrom a mask having regions of varying light transmitting ability in accordance with the hologram, subsequently placing said mask in contact with a layer of photopolymerisable material and producing a transmission hologram by exposing said layer of photopolymer to polymerising light through said mask.

Preferably the mask is so derived as to have, on one surface, a surface relief pattern corresponding with said hologram and, in particular, having depressions corresponding in position with the regions of high light transmitting ability, and wherein said layer of photopolymerisable material is placed in contact with said one surface of the mask whereby the photopolymerisable material tends to flow into and fill said depressions during selective polymerisation resulting from exposure of the photopolymerisable material through the mask.

The invention also extends to a hologram produced by the method.

Embodiments of the invention are described below by way of example with reference to the accompanying drawings in which:-
FIGURE 1 is a schematic diagram illustrating a conventional holographic process, and
FIGURES 2, 3 and 4 are schematic sectional views illustrating the reproduction of a hologram by a method embodying the invention.

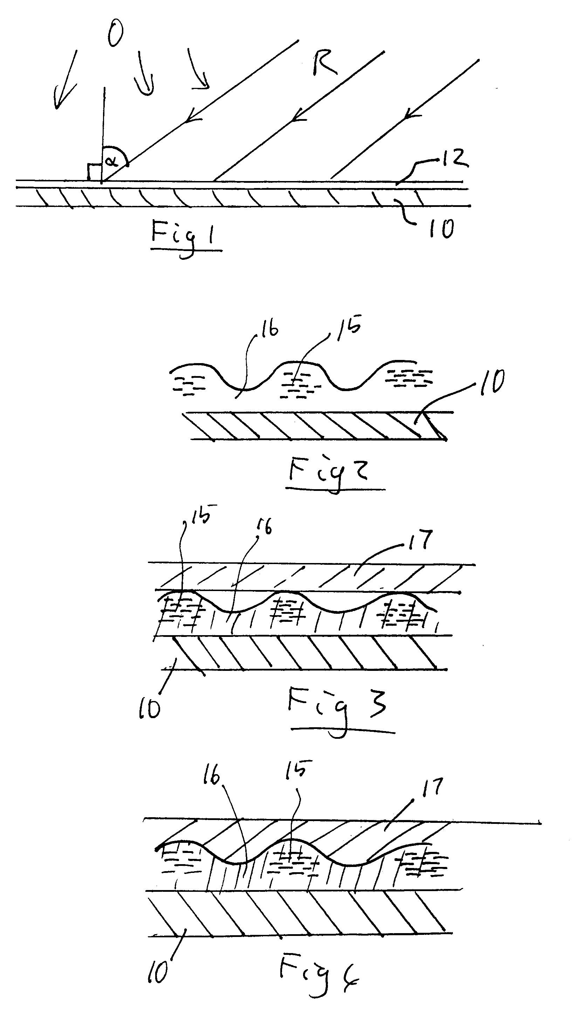

Referring to the drawings, Figure 1 shows a hologram being recorded, conventionally, on a photographic plate 10 having a silver halide emulsion layer 12. Laser light from an object (not shown) is indicated generally at O and a reference beam of the same laser light, incident at angle α to the normal to the plate 10 is indicated at R.

After exposure, the photographic plate 10 is processed to produce a relief image.

It is well known that the processing of silver halide in gelatin layers can produce relief images by two main methods:
(a) the development of the layer followed by fixing - thus causing a collapse of the layer in the unexposed regions;
(b) the development of the layer followed by etch bleaching to dissolve the developed silver and the gelatin in the regions of the exposed image.

In preferred embodiments of the invention, method (a) is used to provide a hologram which can be used as an optical mask for the reproduction of corresponding holograms in a photopolymer and which mask has a surface relief pattern corresponding with the photographic hologram pattern in the mask.

This procedure utilises for the photographic plate 10 a high resolution photographic material (e.g. Agfa-Gavaert 8ES6HD or Millimask material) comprising a relatively thick (about 6µm) layer of silver halide/gelatin emulsion on a supporting substrate.

Referring to Figure 2, after exposure to the holographic image as described with reference to Figure 1 the exposed photographic material is then photographically processed by development for extreme contrast, preferably to an optical density D of about 1, and is then fixed, hardened and dried. The removal of the undeveloped silver halide from the unexposed regions during fixing causes a collapse of the gelatin layer in these unexposed regions. Figure 2 illustrates schematically, in section and to a much enlarged scale, a typical portion of the plate at this stage, the silver grains being indicated at 15 and the regions of clear gelatin being indicated at 16. The regions of clear gelatin form, by reason of the above noted collapse through silver halide removal, depressions in the surface of the developed emulsion layer.

There is then applied (see Figure 3) to the resulting relief surface provided by the emulsion side of the plate a layer 17 of a photopolymerisable substance which is subsequently selectively exposed to polymerising radiation (e.g. to ultra-violet light) through the plate 10, 12. Thus the photopolymerisable substance thus starts to polymerise selectively in the vicinity of each clear region 16.

The photopolymer used may be that supplied by Du Pont under the Registered Trade Mark OMNIDEX and having the type designation HRF150 or HRF600. The monomer in the HRF series photopolymers is fluorescent N-vinyl-carbazole (NVC) dispersed in a plasticised polyvinyl acetate (PVAC), cellulose acetate butyrate (CAB) or polyvinyl butyrate (PVB) as the polymeric binder. The material may be initiated either by photoinitiators or by a photosensitizing dye/initiator combination.

The OMNIDEX materials are available in sheet form, comprising a layer of the monomer on a polyester film base (MYLAR) the layer being entirely covered with a polyester (MYLAR) film.

It has been found that during the polymerisation of the monomer during and following such exposure through the mask formed by the etched and developed plate 10, 12, there is a bulk migration of material from the unexposed areas into the exposed areas, believed to represent migration of monomer molecules into the regions of polymerisation, with the result that, as illustrated in Figure 4, the monomer/polymer, as indicated at 18, tends to fill the depressions above the clear regions 16 so that the surface of the photopolymer 17 in contact with the emulsion layer is given a relief pattern corresponding with the hologram. The surface relief can be enhanced by heating the material during and/or after exposure, to increase the mobility of the monomer molecules.

After the selective polymerisation of the material has been completed, it is subjected to a blanket exposure to polymerising light, from the side remote from the plate 10, 12 after which the photopolymer can be stripped from the plate 10, 12. It has been found that accompanying the contouring effect described, the selective photopolymerisation described is accompanied by an associated refractive index variation, which enhances the optical effects of the surface relief produced.

The method described above may utilise any of a number of commercially available high-resolution photolithographic emulsions for the plate 10, having emulsion thicknesses typically in the region 6µm - 17µm.

The light used to bring about selective polymerisation of the photopolymer through the etched and developed mask need not be coherent light and good results are obtainable using high intensity ultra-violet lamps for such exposure. However, it has been found that, for best results, the angle of incidence of such polymerising light relative to the plane of the plate 10, 12 and relative to the holographic image, should correspond approximately to the angle α of the reference beam R for production of the original hologram (Figure 1).

The photopolymer sheet separated from the plate 10, 12 constitutes a transmission hologram of high brightness and good characteristics.

It will be appreciated that other techniques capable of providing an optical mask with the desired surface relief characteristics in combination with corresponding variations in light transmissivity may be used. Thus, for example, method (b) identified above may be used. A fuller account of the etch bleaching process to produce a mask having both optical and relief characteristics, for exposure of a photopolymer, is given in WO91/18304 to which reference should be had.

Where volume production of such transmission holograms in photopolymer is desired, the mask may be formed by a glass or silica plate coated on one side with an opaque thin chrome layer typically a fraction of a micron in thickness, coated in turn with a photoresist. The photoresist is exposed to the desired holographic image, either directly, or by "contact" printing through a previously formed holographic mask, in ultra-violet light, whereby the resist is polymerised except in the unexposed areas, and the exposed resist removed.

The plate is then immersed in hydrofluoric acid, immediately after removal of the exposed resist, so that not only is the exposed chrome dissolved by the acid but also the underlying glass is etched away in the exposed spots, (the reverse surface of the glass plate being, of course, protected from the etching acid in the meantime). After withdrawal of the plate from the acid and washing, the remaining resist may be removed in the normal way, leaving the plate with a thin layer of chrome interrupted by transparent regions in which the glass surface is furthermore recessed to form shallow depressions. Alternatively, the remaining resist may be hardened and retained to enhance the surface relief still further. It has been found that, when the plate is etched using hydrofluoric acid, in the manner described, the surfaces of the shallow depressions have microscopic irregularities. It has been found that the surfaces of the depressions are much smoother, on a microscopic scale, if they are formed by so-called ion beam milling, rather than by etching with hydrofluoric acid. Thus, in another arrangement, immediately after exposure of the resist layer and without any intervening washing away of unpolymerised resist, the resist-coated side of the plate is bombarded with a beam of ions which removes the unexposed and thus unhardened resist preferentially, then removes the chrome in the areas exposed by removal of resist and then continues to remove material from the underlying glass layer forming the desired shallow depressions. Ion beam milling is stopped when the depressions have the desired depth. The remaining resist can be removed in the conventional way.

A layer or coating of the photopolymerisable monomer referred to above is then applied to the chrome-coated side of the mask and is subsequently exposed to u.v. light through the mask, from the side of the mask remote from the chrome layer and monomer, whereby photopolymerisation of the monomer occurs in the regions of the windows or apertures in the chrome layer. During exposure of the photopolymerisable material through the mask there is in the course of the resulting photo-induced polymerisation, a flow of molecules into the illuminated areas, resulting, in effect, in an injection of material into the shallow depressions, ensuring that these are completely filled, so that the corresponding surfaces of the contour features of the photopolymer layer accurately follow the form of the shallow depressions in the plate. After the exposure of the photopolymerisable material has been completed (including any blanketing exposure of the material from the opposite side), the photopolymer is stripped from the chromed glass or silica sheet which is then ready (after any intervening cleaning or preparatory process which may be required) to receive a fresh coating of photopolymerisable monomer and for the whole process to be repeated.

It will be appreciated that both "positive" and "negative" photoresist types are available, resists of the "positive" type being characterised by the feature that the photo-resist is rendered selectively removable where it is exposed to u.v. radiation and resists of the "negative" type being characterised by the feature that the photo-resist is selectively retained and rendered more difficult to remove where it is exposed to u.v. radiation. Either type may be used in the above variants of the invention provided that the photographic "mask" (where used) is "positive" or "negative" as appropriate to produce, in the glass/chrome plate light transmitting depressions to receive the monomer/polymer.

The features disclosed in the foregoing description, in the following claims and/or in the accompanying drawings may, both separately and in any combination thereof, be material for realising the invention in diverse forms thereof.

## Claims

1. A method of reproducing holograms comprising photographically recording a hologram in a laminar medium and deriving therefrom a mask having regions of varying light transmitting ability in accordance with the hologram, and further having, on one surface, a surface relief pattern corresponding with said hologram and, in particular, having depressions corresponding in position with the regions of high light transmitting ability, subsequently placing said mask in contact with a layer of photopolymerisable material so that said one surface of the mask, having said surface relief pattern, is in contact with the photopolymerisable material and producing a transmission hologram by exposing said layer of photopolymer to polymerising light through said mask, and whereby the photopolymerisable material tends to flow into and fill said depressions during selective polymerisation resulting from exposure of the photopolymerisable material through the mask.

2. A method according to claim 1 wherein said mask is a photographic plate having thereon a developed and fixed emulsion layer incorporating said hologram.

3. A method according to claim 1 wherein said mask is a photographic plate having thereon a developed and etch-bleached emulsion layer incorporating said hologram.

4. A method according to claim 1 wherein said mask comprises a glass or silica sheet having a chrome layer thereon, the chrome and underlying glass or silica being etched away or otherwise removed in accordance with said hologram.

5. A method according to claim 4 wherein the chrome and underlying glass or silica are selectively removed by hydrofluoric acid etching.

6. A method according to claim 4 wherein the chrome and underlying glass or silica are selectively removed by ion beam milling.
